# EUROPÄISCHE PATENTSCHRIFT

(11) **EP 0 919 315 B1**
(45) Veröffentlichungstag und Bekanntmachung des Hinweises auf die Patenterteilung: **09.01.2002**
(21) Anmeldenummer: 98120469.6
(22) Anmeldetag: 29.10.1998
(51) Int. Cl.: B23D 31/00

(54) **Verfahren zum Bruchtrennen eines Lagerdeckels bei einem Pleuel für Hubkolbenmaschinen**
Method of cracking a connecting rod
Procédé pour casser des bielles

(30) Priorität: 28.11.1997 DE 19752753
(43) Veröffentlichungstag der Anmeldung: 02.06.1999
(73) Patentinhaber: Bayerische Motoren Werke Aktiengesellschaft, 80788 München (DE)
(72) Erfinder: Luchner, Clemens, 85598 Baldham (DE); Silomon, Martin, Dr., 80805 München (DE); Grimbach, Peter, 85757 Karlsfeld (DE)

(56) Entgegenhaltungen:
- EP-A- 0 432 915
- DE-A- 19 617 402

## Beschreibung

Die Erfindung bezieht sich nach dem Oberbegriff des Patentanspruches 1 auf ein Verfahren zum Bruchtrennen eines Lagerdeckels bei einem Pleuel für Hubkolbenmaschinen, bei dem zur gezielten Bruchauslösung an einem Lagerauge eine Anrißstelle mittels Strahlenergie (Elektronenstrahl, Laserstrahl) erzeugt wird, wobei zumindest abschnittsweise entlang einer Seite der Bruchtrennebene von der Bauteiloberfläche aus durch querschnittsschwache Stege voneinander getrennte, sacklochartige Vertiefungen erzeugt werden und die Stege zumindest in ihren freien, bauteiloberflächennahen Endabschnitten (Stegspitzen) durch Versprödung bewirkte Risse als Mikrokerben aufweisen.

Aus der US 3 818 577 ist ein Verfahren zur Erzielung einer flächigen Bruchtrennung zwischen integralen Teilen eines Bauteils bekannt, bei dem mittels eines Elektronenstrahls das Material des Bauteils im Bereich der vorgesehenen Trennebene gezielt versprödet wird zur Auslösung einer mit üblicher Einkerbung gestarteten Bruchtrennung bei schlagartig einsetzender Bruchtrennkraft. Die mit diesem Verfahren erzielten Bruchtrennflächen in einer Ebene weisen eine nachteilig geringe gegenseitige Verzahnung auf, so daß zur sicheren formschlüssigen Verzahnung der bruchgetrennten Teile vorgeschlagen wird, den Elektronenstrahl längs einer Wellenlinie über das Bauteil zu führen zur Erzielung entsprechend gewählter Bruch-Paßflächen.

Ein anderer Weg zur Bruchauslösung in einem Bauteil durch eine gezielt angeordnete Anrißstelle ist in der amerikanischen Zeitschrift "mechanical engineering" der April-Ausgabe von 1990 in dem Artikel "detroit looks to lasers" auf Seite 41 in der linken Spalte beschrieben, wobei in einem naturharten Werkstück mittels Laser eine Reihe von nebeneinander angeordneten Sacklochbohrungen erzeugt werden zur Erzielung eines kontrollierten Bruches in dem Werkstück.

Die Anwendung dieser bekannten Laser-Perforation zur Ausbildung einer Anrißstelle zur Einleitung einer Bruchtrennung in einem Stahl-Pleuel ist in der DE-U 295 19 126 bzw. der gleichlautenden deutschen Offenlegungsschrift DE 195 34 360 A beschrieben. Hierbei wird erklärtermaßen die Strahlenergie zum Bohren der sacklochartigen Vertiefungen mittels des Lasers so eingestellt, daß die zwischen den Vertiefungen gegebenen Stege keiner Versprödung durch Martensit unterliegen, um diese Anrißstelle im nachhinein noch spanabhebend bearbeiten zu können.

Zur Erzielung einer gegenüber dem aufgezeigten Stand der Technik effizienteren Anrißstelle mit über ihre Länge gezielt verteilten Starterrissen wurde das eingangs beschriebene Verfahren in der P 196 17 402 bzw. in der gleichlautenden PCT-Anmeldung WO 97/22430 vorgeschlagen mit dem Ziel, in zumindest abschnittsweise versprödeten Stegen von relativ kleinem Querschnitt mit der Versprödung Risse zu erzielen zur erleichterten Auslösung des Bruchtrennens.

Der Erfindung liegt die Aufgabe zugrunde, das gattungsgemäße Verfahren weiterzubilden zum Bruchtrennen eines Pleuels aus einem Titan-Werkstoff.

Diese Aufgabe ist mit dem Patentanspruch dadurch gelöst, daß ein Pleuel aus einem Titanwerkstoff im Bereich der Bruchtrennebene auf eine jeweilige β-Transus-Temperatur erwärmt und durch eine anschließende Abkühlung mittels/an der Luft eine Bruchtrenn-Zone mit einem lamellaren α + β-Gefüge erzeugt wird, und in dieser Bruchtrenn-Zone die Anrißstelle angeordnet wird, wobei durch temperaturabhängige, oberflächennahe interstitielle Aufnahme von Stickstoff und Sauerstoff die α-Phase der Stege versprödet wird zur Ausbildung der das Bruchtrennen einleitenden Risse bzw. Mikrokerben.

Der Vorteil der Erfindung ist, daß ein Pleuel aus einem bekannt duktilen Titan-Werkstoff mit dem erfindungsgemäß erweiterten Verfahren des Bruchtrennens mit einer in kleinsten Querschnitten der Stege durch Versprödung aufweisende Risse bzw. Mikrokerben ausgebildeten Anrißstelle beim Bruchtrennen eine erheblich reduzierte plastische Verformung aufweist durch eine mit dem Verfahren lokal gesteigerte Kerbempfindlichkeit.

Zur Erzielung einer den Abmessungen des Pleuels entsprechend angepaßten, relativ schmalen Bruchtrenn-Zone wird diese vorzugsweise induktiv erwärmt. Dies hat in weiterer Ausgestaltung der Erfindung den Vorteil, daß die induktive Erwärmung der Bruchtrenn-Zone unter Umgebungsluft bewirkt werden kann, wobei die Werkstückoberfläche in der α-Phase im Bereich der Bruchtrenn-Zone zusätzlich durch Luft-Stickstoff und Luft-Sauerstoff versprödet wird.

Mit dieser oberflächennahen Versprödung der Bruchtrenn-Zone sind in vorteilhafter Weise beim Bruchtrennen die Ausbildung von Scherlippen entlang der Kanten der Bruchtrennflächen vermieden.

Zur Erzielung einer relativ schmalen Bruchtrenn-Zone mit geringem Wärmeeintrag durch die induktive Erwärmung werden am Lagerauge vorgesehene Schraubenpfeifen vor der Zonen-Erwärmung durchgebohrt und gegebenenfalls abschnittsweise mit einem Gewinde versehen. Mit einer auf diese Weise erzielten Querschnittsverringerung ist der Wärmeeintrag wesentlich reduziert und lokalisiert.

Die Erfindung ist im folgenden beschrieben.

Bei einem Pleuel aus einem Titan-Werkstoff ist das große Lagerauge durch Bruchtrennen eines Lagerdeckels zu teilen. Zur gezielten Bruchauslösung ist an dem großen Lagerauge in diametralen Bereichen jeweils eine mittels vorzugsweise Laserstrahl erzeugte Anrißstelle vorgesehen, wobei zumindest abschnittsweise entlang einer Seite der Bruchtrennebene insbesondere von der Bauteiloberfläche der Lagerbohrung des großen Lagerauges aus durch querschnittsschwache Stege voneinander getrennte, sacklochartige Vertiefungen durch Schmelzen, Verdampfen und/oder Ausblasen erzeugt werden. Die zwischen den Vertiefungen verbleibenden Stege weisen zumindest in ihren freien, bauteiloberflächennahen Stegspitzen durch Versprödung bewirkte Risse als Mikrokerben auf, die einer vorteilhaften Einleitung der Bruchtrennung dienen.

Das vorbeschriebene, in der PCT-Anmeldung WO 97/22430 vorgeschlagene Verfahren ist aufgabengemäß zu erweitern zum Bruchtrennen eines Pleuels aus einem bekannt duktilen Titan-Werkstoff, vorzugsweise TiAl6V4.

Erfindungsgemäß wird bei einem Pleuel aus diesem Titan-Werkstoff TiAl6V4 der Bereich der Bruchtrennebene auf eine β-Transus-Temperatur von ca. 990°C erwärmt, wobei durch eine anschließende Abkühlung mittels Luft oder an der Umgebungsluft eine Bruchtrenn-Zone mit einem spröden α + β-Gefüge erzeugt wird. In dieser durch die lamellare Gefügeausbildung bruchfreundlichen Zone wird eine wie oben beschrieben erzeugte Anrißstelle angeordnet, wobei insbesondere in den Stegspitzen durch temperaturabhängige, oberflächennahe interstitielle Aufnahme von Stickstoff und Sauerstoff die α-Phase versprödet wird mit dem Ziel der selbsttätigen Ausbildung von Rissen bzw. Mikrokerben zur erleichterten Einleitung des Bruchtrennens.

Eine auf die jeweilige bauliche Abmessung des Pleuels abgestimmte, relativ schmale Bruchtrenn-Zone wird vorzugsweise induktiv erwärmt, wobei die Frequenz des Induktionsstromes vorteilhaft niedrig ist bei gering zu erwärmender Masse der Bruchtrenn-Zone. Weiter kann in vorteilhafter Weise die induktive Erwärmung der Bruchtrenn-Zone unter Umgebungsluft durchgeführt werden, wobei die Werkstückoberfläche in der α-Phase im Bereich der Bruchtrenn-Zone zusätzlich durch Luft-Stickstoff und Luft-Sauerstoff versprödet wird. Damit ist in vorteilhafter Weise die Ausbildung von Scherlippen entlang der Kanten der Bruchtrennflächen vermieden.

Der Eintrag an Induktionswärme kann weiter dadurch vorteilhaft gering gehalten werden, daß am Lagerauge vorgesehene Schraubenpfeifen vor einer Zonen-Erwärmung gebohrt und gegebenenfalls abschnittsweise mit einem Gewinde versehen werden. Der auf diese Weise reduzierte, zu erwärmende Querschnitt ergibt neben einer niederfrequenten Induktion eine sichere Durchwärmung der Bruchtrenn-Zone unter Vermeidung eines erhöhten Wärmeeintrages.

Mit dem erfindungsgemäßen Verfahren kann der für Pleuel bekannte Werkstoff TiAl6V4 bevorzugt verwendet werden, der als α + β-Legierung in feinkristalliner, globularer Gefügeausbildung aufgrund seiner hohen Duktilität bei hoher Bruchkraft und einem Bruchgefüge mit Scherlippen und zu feiner Bruchstruktur für ein Bruchtrennen ohne das erfindungsgemäße Verfahren kaum geeignet ist.

## Patentansprüche

1. Verfahren zum Bruchtrennen eines Lagerdeckels bei einem Pleuel für Hubkolbenmaschinen,
- bei dem zur gezielten Bruchauslösung an einem Lagerauge eine Anrißstelle mittels Strahlenergie erzeugt wird, wobei
- zumindest abschnittsweise entlang einer Seite der Bruchtrennebene von der Bauteiloberfläche aus durch querschnittsschwache Stege voneinander getrennte, sacklochartige Vertiefungen durch Schmelzen, Verdampfen und/oder Ausblasen erzeugt werden, so dass die Stege zumindest in ihren freien, bauteiloberflächennahen Endabschnitten durch Versprödung bewirkte Risse als Mikrokerben aufweisen,
**dadurch gekennzeichnet,**
- **daß** ein Pleuel aus einem Titan-Werkstoff im Bereich der Bruchtrennebene auf eine jeweilige β-Transus-Temperatur erwärmt und durch eine anschließende Abkühlung mittels/an der Luft eine Bruchtrenn-Zone mit einem lamellarem α + β-Gefüge erzeugt wird, und
- in dieser Bruchtrenn-Zone die Anrißstelle angeordnet wird, wobei
- durch temperaturabhängige, oberflächennahe interstitielle Aufnahme von Stickstoff (N) und Sauerstoff (O) die α-Phase der Stege versprödet wird zur Ausbildung der das Bruchtrennen einleitenden Risse bzw. Mikrokerben.

2. Verfahren nach Anspruch 1, **dadurch gekennzeichnet, daß** die Bruchtrenn-Zone induktiv erwärmt wird.

3. Verfahren nach Anspruch 1 und 2, **dadurch gekennzeichnet,**
- **daß** die induktive Erwärmung der Bruchtrenn-Zone unter Umgebungsluft durchgeführt wird, wobei
- die Werkstückoberfläche in der α-Phase im Bereich der Bruchtrenn-Zone zusätzlich durch Luft-Stickstoff und Luft-Sauerstoff versprödet wird.

4. Verfahren nach den Ansprüchen 1 bis 3, **dadurch gekennzeichnet, daß** am Lagerauge vorgesehene Schraubenpfeifen vor einer Bruchtrenn-Zonen-Erwärmung gebohrt und ggf. abschnittsweise mit einem Gewinde versehen werden.

5. Verfahren nach den Ansprüchen 1 bis 4, **gekennzeichnet durch** die Verwendung von TiAl6V4 als Titan-Werkstoff für ein Pleuel, der in der Bruchtrennebene auf die β-Transus-Temperatur von ca. 990°C induktiv erwärmt wird.

## Claims

1. A method of breaking off a bearing cover in the case of a connecting rod for reciprocating engines,
- wherein an incipient crack is generated by radiant energy for the purpose of controlled initiation of a fracture at a lug, wherein
- blind bore-like recesses separated by webs having a small cross-section are formed by melting, evaporation and/or blowing out along at least parts of a side of the fracture plane starting from the surface of the component, so that the webs, at least at their free end portions near the surface of the component, have micro-notches in the form of cracks produced by embrittlement,
**characterised in that**
- a connecting rod made of a titanium material is heated to a respective β-transus temperature in the region of the fracture plane and a fracture zone with a lamellar α + β structure is generated by subsequent cooling with or in air, and
- the incipient crack is positioned in the said fracture zone, wherein
- the α-phase of the webs is made brittle by temperature-dependent absorption of nitrogen (N) and oxygen (O) through interstices near the surface, to form the cracks or micro-notches for initiating the fracture.

2. A method according to claim 1, **characterised in that** the fracture zone is heated by induction.

3. A method according to claims 1 and 2, **characterised in that**
- inductive heating of the fracture zone is effected in ambient air, wherein
- the workpiece surface in the α-phase is additionally made brittle by atmospheric nitrogen and atmospheric oxygen in the neighbourhood of the fracture zone.

4. A method according to claims 1 to 3, **characterised in that** before heating the fracture zone, screwholes are drilled in the lug and portions thereof if required are formed with a thread.

5. A method according to claims 1 to 4, **characterised by** use of TiAl₆V₄ as a titanium material for a connecting rod heated by induction to the β-transus temperature of about 990°C in the fracture zone.

## Revendications

1. Procédé de séparation par rupture d'un chapeau de palier d'une bielle de moteur à pistons linéaires selon lequel
- pour déclencher de manière dirigée la rupture d'un oeillet de palier, on réalise des points d'amorce de rupture par une énergie de rayonnement,
- au moins par segments le long d'un côté du plan de séparation par rupture, partant de la surface de la pièce, on réalise des cavités en forme de perçages borgnes, séparées les unes des autres par des nervures de section réduites, ces cavités étant obtenues par fusion, évaporation et/ou soufflage pour que les nervures présentent au moins dans leur segment d'extrémité, libre proche de la surface de la pièce, des fissures produites en rendant la matière cassante et constituant des micro-amorces de rupture,
**caractérisé en ce que**
- dans une bielle en titane, au niveau du plan de séparation par rupture, on chauffe à une température de transition β, respective, par un refroidissement consécutif avec ou à l'air, on réalise une zone de séparation par rupture avec un réseau lamellaire α + β et,
- dans cette zone de séparation par rupture on a les points d'amorce de rupture, et
- par une absorption interstitielle proche de la surface, dépendante de la température d'azote (N) et (O), on rend cassante la phase α des nervures pour former les fissures ou micro-amorces qui favorisent la séparation par rupture.

2. Procédé selon la revendication 1,
**caractérisé en ce qu'**
on chauffe par induction par la zone de séparation par rupture.

3. Procédé selon la revendication 1 et 2,
**caractérisé en ce qu'**
- on effectue le chauffage inductif de la zone de séparation par rupture sous atmosphère ambiante, et
- on rend cassante la surface de la pièce dans la phase α au niveau de la zone de séparation par rupture en outre avec de l'azote et de l'oxygène de l'air.

4. Procédé selon l'une quelconque des revendications 1 à 4,
**caractérisé en ce que**
les pipes à vis prévues sur l'oeillet de palier sont percées avant de chauffer les zones de séparation par rupture et le cas échéant elles sont munies par segment d'un filetage.

5. Procédé selon l'une quelconque des revendications 1 à 4,
**caractérisé en ce qu'**
on utilise comme matériau au titane le titane TiAl6V4 pour une bielle que l'on chauffe dans le plan de séparation par rupture à la température de transition β qui est d'environ 990°C, le chauffage étant fait par induction.
